# EUROPÄISCHE PATENTANMELDUNG

(11) **EP 2 703 136 A1**
(43) Veröffentlichungstag der Anmeldung: **05.03.2014**
(21) Anmeldenummer: 13001178.6
(22) Anmeldetag: 08.03.2013
(51) Int. Cl.: B26D 3/16, B26D 7/08, B26F 3/06, F16L 33/207

(54) **Verfahren zum Ablängen eines Schlauch-Teilstückes von einem Schlauch**

(30) Priorität: 29.08.2012 US 201213597731
(71) Anmelder: Neoperl GmbH, 79379 Müllheim (DE)
(72) Erfinder: Schlitter, Roger, 79117 Freiburg (DE)
(74) Vertreter: Börjes-Pestalozza, Heinrich

(57) **Zusammenfassung**

Die Erfindung betrifft ein Verfahren zum Ablängen eines Schlauch-Teilstückes (1) von einem Schlauch, welcher Schlauch einen Innenschlauch (2) und eine den Innenschlauch (2) umschließende äußere Schlauchummantelung (3) aufweist, wobei das Schlauch-Teilstück (1) mit Hilfe eines Schneidwerkzeuges an einer Schnittstelle in einer quer zur Längserstreckung des Schlauches orientierten Schnittebene von diesem abgetrennt wird, wobei die Schlauchummantelung (3) des Schlauches mittels einer durchtrennbaren Schlauchfixierung (4) umhüllt wird, welche die vorgesehene Schnittstelle überdeckt, bevor das Schlauch-Teilstück (1) an der Schnittstelle vom Schlauch mit Hilfe des Schneidwerkzeuges abgetrennt wird, und wobei die Schlauchfixierung (4) die äußere Schlauchummantelung (3) in Umfangsrichtung vollständig umschließt. Für das erfindungsgemäße Verfahren ist kennzeichnend, dass die Schlauchfixierung (4) auf der Schlauchummantelung (3) derart fixiert und/oder der von der Schlauchfixierung (4) umschlossene Schlauch mit Hilfe des Schneidwerkzeuges derart durchtrennt wird, dass eine Relativverschiebung der Schlauchfixierung (4) gegenüber der Schlauchummantelung (3) beziehungsweise der Schlauchummantelung (3) gegenüber dem Innenschlauch (2) verhindert ist (vgl. Fig. 8).

## Beschreibung

Die Erfindung betrifft ein Verfahren zum Ablängen eines Schlauch-Teilstückes von einem Schlauch, welcher Schlauch einen Innenschlauch und eine den Innenschlauch umschließende äußere Schlauchummantelung aufweist, wobei das Schlauch-Teilstück mit Hilfe eines Schneidwerkzeuges an einer Schnittstelle in einer quer zur Längserstreckung des Schlauches orientierten Schnittebene von diesem abgetrennt wird, wobei die Schlauchummantelung des Schlauches mittels einer durchtrennbaren Schlauchfixierung umhüllt wird, welche die vorgesehene Schnittstelle überdeckt, bevor das Schlauch-Teilstück an der Schnittstelle vom Schlauch mit Hilfe des Schneidwerkzeuges abgetrennt wird, und wobei die Schlauchfixierung die äußere Schlauchummantelung in Umfangsrichtung vollständig umschließt.

Aus der US 2008/0016936 A1 ist bereits ein Verfahren der eingangs erwähnten Art bekannt, das zum Ablängen eines Schlauch-Teilstückes von einem Schlauch verwendet wird, der einen Innenschlauch und eine den Innenschlauch umschließende äußere Schlauchummantelung aufweist, die als ein aus Metall- oder Kunststofffäden gebildetes Geflecht ausgestaltet ist. Um das Schlauch-Teilstück mit Hilfe eines Schneidwerkzeuges an einer Schnittstelle in einer quer zur Längserstreckung des Schlauches orientierten Schnittebene vom Schlauch abtrennen zu können, sieht das vorbekannte Verfahren vor, die Schlauchummantelung des Schlauches mittels einer durchtrennbaren Schlauchfixierung zu umhüllen, welche die vorgesehene Schnittstelle überdeckt, bevor das Schlauch-Teilstück an der Schnittstelle vom Schlauch mit Hilfe des Schneidwerkzeuges abgetrennt wird. Das vorbekannte Verfahren verhindert zwar, dass sich einzelne Metall- oder Kunststofffäden des als Schlauchummantelung vorgesehenen Geflechts verhaken können, wenn auf das derart abgelängte Schlauch-Teilstück eine Klemmhülse aufgeschoben werden soll; meist weisen diese Klemmhülsen jedoch einen im Vergleich zum Außendurchmesser des Schlauch-Teilstückes derart angepassten Klemmhülseninnendurchmesser auf, dass beim Aufschieben der Klemmhülse die Gefahr besteht, dass die Schlauchfixierung gegenüber der Schlauchummantelung und zusätzlich oder statt dessen die Schlauchummantelung gegenüber dem Innenschlauch zurückgeschoben wird, wodurch wiederum die Klemmhülse nicht ausreichend sicher und fest auf dem entsprechenden Ende des Schlauch-Teilstückes gehalten wird. Wird die Klemmhülse demgegenüber mit einem im Vergleich zum Außendurchmesser des Schlauchgeflechtes wesentlich größeren Innendurchmesser hergestellt, um in unverformtem Zustand einen großen radialen Abstand zwischen diesen Teilen zu erreichen und um eine Kollision der Geflechtenden mit der Klemmhülse beim Aufschiebevorgang zu vermeiden, wirkt sich dieser große radiale Abstand beim nachfolgenden Crimpvorgang nachteilig aus.

Es besteht daher insbesondere die Aufgabe, das eingangs erwähnte Verfahren derart zu verbessern, dass das Risiko minimiert wird, dass die Schlauchfixierung gegenüber der Schlauchummantelung oder die Schlauchummantelung gegenüber dem Innenschlauch beim Aufschieben eines Schlauch-Endstücks verschoben wird.

Die erfindungsgemäße Lösung dieser Aufgabe besteht bei dem Verfahren der eingangs erwähnten Art insbesondere darin, dass die Schlauchfixierung auf der Schlauchumhüllung derart fixiert und/oder der von der Schlauchfixierung umschlossene Schlauch mit Hilfe des Schneidwerkzeuges derart durchtrennt wird, dass eine Relativverschiebung der Schlauchfixierung gegenüber der Schlauchummantelung beziehungsweise der Schlauchummantelung gegenüber dem Innenschlauch verhindert ist.

Auch bei dem erfindungsgemäßen Verfahren wird die Schlauchummantelung vor dem Ablängen eines Schlauch-Teilstückes mittels einer durchtrennbaren Schlauchfixierung umhüllt, welche die vorgesehene Schnittstelle überdeckt, bevor das Schlauch-Teilstück an der Schnittstelle vom Schlauch mit Hilfe des Schneidwerkzeuges durchtrennt wird. Das erfindungsgemäße Verfahren sieht hierbei vor, dass die Schlauchfixierung die äußere Schlauchummantelung in Umfangsrichtung vollständig umschließt und somit die Schlauchummantelung mindestens über 360° des Umfangs überdeckt oder umschlingt. Dabei wird die Schlauchfixierung auf der Schlauchummantelung derart fixiert und/oder der von der Schlauchfixierung umschlossene Schlauch mit Hilfe eines Schneidwerkzeuges derart durchtrennt, dass eine Relativverschiebung der Schlauchfixierung gegenüber der Schlauchummantelung beziehungsweise der Schlauchummantelung gegenüber dem Innenschlauch verhindert ist.

Eine besonders einfache Verfahrensweise, die das Aufbringen einer solchen Schlauchfixierung auf einen Schlauch wesentlich erleichtert, sieht vor, dass die Schlauchfixierung ein einseitig klebendes Klebeband ist.

Dabei sieht eine Variante des erfindungsgemäßen Verfahrens vor, dass die als Klebeband ausgestaltete Schlauchfixierung ein den Schlauch vollständig umschließendes Mittelstück hat, an das sich beidseits Schlauch-Endstücke anschließen, dass die Schlauch-Endstücke mit ihren Klebeflächen einander anliegen, und dass die mit ihren Klebeflächen aneinander anliegenden Schlauchfixierungs-Endstücke derart an den Schlauch angelegt sind, dass die Klebefläche eines der Schlauch-Endstücke mit einem über das andere Schlauch-Endstück überstehenden Teilbereich an dem Schlauch oder dem Schlauch-Teilstück klebend gehalten ist.

Eine weitere Ausführungsform gemäß der Erfindung besteht darin, dass die als Klebeband ausgestaltete Schlauchfixierung zwei miteinander verbundene Schlauchfixierungs-Teilbereiche hat, von denen der eine Schlauchfixierungs-Teilbereich den Schlauch vollständig umschließt und von denen der andere Schlauchfixierungs-Teilbereich mit seiner Klebefläche klebend an der Außenseite des den Schlauch umschließenden Schlauchfixierungs-Teilbereiches gehalten ist. Diese Ausführungsform gemäß der Erfindung bietet den Vorteil, dass die Schlauchfixierung nur wenig über den Außendurchmesser der Schlauchummantelung aufträgt.

Eine Weiterbildung des erfindungsgemäßen Verfahrens besteht darin, dass die Schlauchfixierung ein Schrumpfschlauch ist, dessen lichter Schlauchdurchmesser durch Wärmeeinwirkung derart reduzierbar ist, dass der Schrumpfschlauch unverrückbar am Schlauchaußenumfang und insbesondere an der Schlauchummantelung des Schlauches anliegt. Ein solcher Schrumpfschlauch kann auch als endlos umlaufendes und die Schlauchummantelung vollständig umschließendes Kunststoffband ausgestaltet sein. Bei einer Wärmeeinwirkung des Schrumpfschlauches wird dessen lichter Schlauchdurchmesser derart reduziert, dass sich der Schrumpfschlauch straff an die Schlauchummantelung anlegt. Damit wird aber gleichzeitig auch die Schlauchummantelung derart auf den Innenschlauch gepresst, dass ein Verschieben der Schlauchfixierung gegenüber der Schlauchummantelung und der Schlauchummantelung gegenüber dem Innenschlauch verhindert wird.

Bei längeren Schlauch-Teilstücken, auf die sich ein Schrumpfschlauch eventuell nur umständlich aufschieben und positionieren lässt, sieht eine einfache und vorteilhafte Variante des erfindungsgemäßen Verfahrens vor, dass die Schlauchfixierung als eine die Schlauchummantelung in einem Teilabschnitt in Umfangsrichtung vollständig umschließende Umhüllung im Spritzguss-Verfahren ausgestaltet ist.

Um beim Ablängen des Schlauch-Teilstückes unerwünschte Querkräfte zu vermeiden, die ein Verschieben der Schlauchfixierung gegenüber der Schlauchummantelung oder gar der Schlauchummantelung gegenüber dem Innenschlauch zumindest in axialer Richtung bewirken könnte, sieht eine weiterbildende Ausführungsform gemäß der Erfindung vor, dass der Schlauch mittels eines als Schneidwerkzeug dienenden und etwa senkrecht zur Schlauch-Längsrichtung geführtes Schneidmesser abgelängt wird. Mit Hilfe eines solchen, etwa senkrecht zur Schlauch-Längsrichtung geführten Schneidmesser kann das Schlauch-Teilstück vom Schlauch an der gewünschten Schnittstelle gut abgelängt werden.

Möglich ist aber auch, dass der Schlauch mittels eines eine Schneidhitze entwickelnden Schneidwerkzeuges abgelängt wird und zwar vorzugsweise derart, dass das während der Schneidhitze teigig werdende Kunststoffmaterial wenigstens eines der Bestandteile: Schlauchfixierung, Schlauchummantelung oder Innenschlauch zumindest bereichsweise wenigstens eines der benachbarten Bestandteile verklebt, verschmilzt oder dergleichen fixiert, um die Relativposition zwischen der Schlauchummantelung und dem Innenschlauch zu sichern. Wird eine beispielsweise aus Kunststofffäden hergestellte Schlauchummantelung mittels eines solchen, eine Schneidhitze entwickelnden Schneidwerkzeuges abgelängt, kann das durch die Schneidhitze teigig werdende Kunststoffmaterial der Kunststofffäden sich derart an der Schlauchummantelung und/oder dem Innenschlauch verkleben oder verschmelzen, dass eine Relativverschiebung dieser Bestandteile zumindest in axialer Richtung vermieden wird.

Eine bevorzugte Ausführungsform gemäß der Erfindung sieht vor, dass auf das mit Hilfe der Schlauchfixierung gesicherte Ende des Schlauch-Teilstückes eine Klemmhülse, eine Crimphülse oder ein hülsenförmiges Schlauch-Endstück aufgeschoben ist und dass die Schlauchfixierung über das innenliegende Ende der Klemmhülse, Crimphülse oder dem Schlauch-Endstück vorsteht und einen Knickschutz bildet.

Weiterbildungen gemäß der Erfindung ergeben sich aus den Figuren in Verbindung mit den Ansprüchen sowie der Beschreibung. Nachstehend wird die Erfindung anhand bevorzugter Ausführungsbeispiele noch näher beschrieben.

Es zeigen:
- Fig.1 bis 4: einzelne Verfahrensschritte eines zum Ablängen eines Schlauch-Teilstückes bestimmten Verfahrens, wobei auf den abzulängenden Schlauch eine als Klebeband ausgestaltete Schlauchfixierung aufgebracht wird, die ein den Schlauch vollständig umschließendes Mittelstück hat, an das sich beidseits Schlauch-Endstücke anschließen,
- Fig.5 bis 8: Verfahrensschritte eines ebenfalls zum Ablängen eines Schlauch-Teilstückes bestimmten Verfahrens, wobei auf den abzulängenden Schlauch eine als Klebeband ausgestaltete Schlauchfixierung aufgebracht wird, die zwei Schlauchfixierungs-Teilbereiche hat, von denen der eine Schlauchfixierungs-Teibereich den Schlauch vollständig umschließt, während der andere Schlauchfixierungs-Teilbereich mit seiner Klebefläche klebend an der Außenseite des den Schlauch umschließenden Schlauchfixierungs-Teilbereiches gehalten ist,
- Fig. 9 bis 11: Verfahrensschritte zum Ablängen eines Schlauch-Teilstückes, wobei auf den abzulängenden Schlauch ein Schrumpfschlauch als Schlauchfixierung aufgebracht wird, welcher Schrumpfschlauch in seinem lichten Schlauchdurchmesser durch Wärmeeinwirkung derart reduzierbar ist, dass sich der Schrumpfschlauch unverrückbar an der Schlauchummantelung anlegt,
- Fig.12 und 13: eine über ein Schlauch-Endstück vorstehende und als Knickschutz dienende Schlauchfixierung in einer Seitenansicht (Fig.12) und einer perspektivischen Darstellung (Fig. 13),
- Fig.14 und 15: die zum Ablängen eines Schlauch-Teilstückes bestimmten Verfahrensschritte, wobei hier ein Guillotine-ähnliches Schneidwerkzeug verwendet wird, das während des Schneidvorganges etwa senkrecht zur Schlauch-Längsrichtung geführt wird,
- Fig.15 und 17: die zum Ablängen eines Schlauch-Teilstückes bestimmten Verfahrensschritte, wobei der Schlauch hier mittels eines eine Schneidhitze entwickelnden Schneidwerkzeuges abgelängt wird, und
- Fig.18: einen zum Ablängen eines Schlauch-Teilstückes vorbereiteten Schlauch, der im Bereich der vorgesehenen Schnittstelle eine als den Schlauch in einem Teilabschnitt in Umfangsrichtung vollständig umschließende Schlauchumspritzung ausgebildet ist.

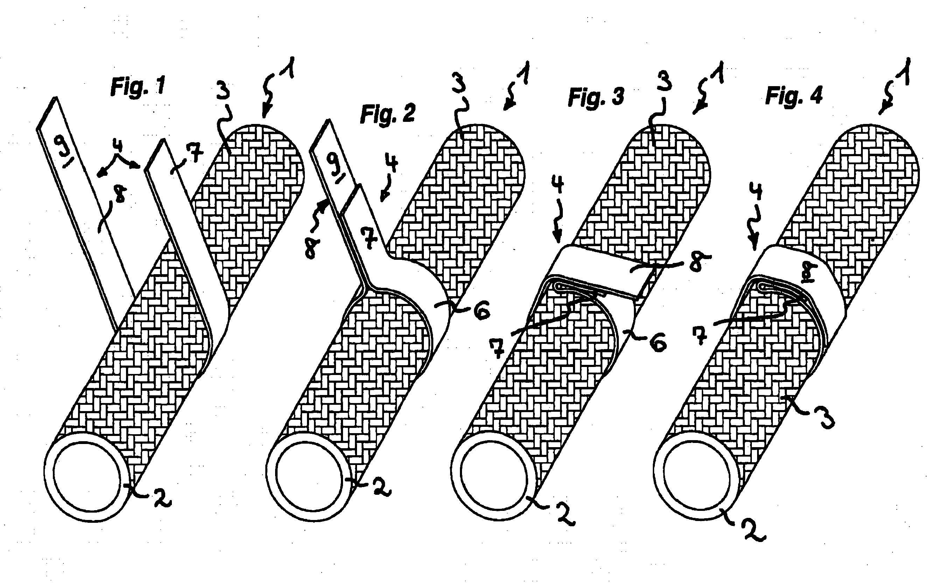

In den Fig. 1 bis 18 sind verschiedene Varianten eines erfindungsgemäßen Verfahrens dargestellt, das zum Ablängen eines Schlauch-Teilstückes 1 von einem flexiblen Schlauch bestimmt ist. Der für das Schlauch-Teilstück 1 verwendete Schlauch weist einen Innenschlauch 2 und eine den Innenschlauch 2 umschließende äußere Schlauchummantelung 3 auf. Die Schlauchummantelung 3 ist hier als Geflecht ausgebildet, das durch miteinander verwobene Metall- oder Kunststofffäden hergestellt wird. Möglich ist auch, ein Hybrid-Geflecht zu verwenden, dessen Geflechtfäden teils aus Kunststoff und teils aus Metall bestehen.

Das Schlauch-Teilstück 1, das beispielsweise zur Herstellung einer flexiblen sanitären Schlauchleitung benötigt wird, wird mit Hilfe eines Schneidwerkzeuges an einer Schnittstelle in einer quer zur Längserstreckung des Schlauches orientierten Schnittebene von diesem abgetrennt. Die Schlauchummantelung 3 ist dazu mittels einer durchtrennbaren Schlauchfixierung 4 umhüllt, welche die vorgesehene Schnittstelle überdeckt, bevor das Schlauch-Teilstück 1 an der Schnittstelle vom Schlauch mit Hilfe des Schneidwerkzeuges abgetrennt wird.

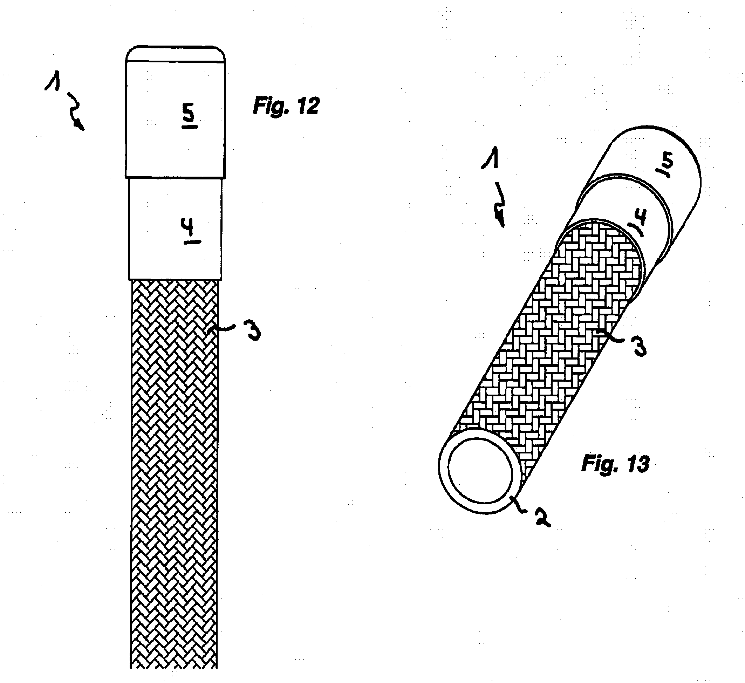

Sanitäre Schlauchleitungen weisen an den beiden Stirnenden meist ein beispielsweise auch als Klemm- oder Crimphülse ausgebildetes hülsenförmiges Schlauch-Endstück 5 auf (vgl. Fig. 12 und 13). Da der lichte Hülseninnendurchmesser eines solchen Schlauch-Endstückes 5 etwa dem Außendurchmesser der insbesondere mit einer Schlauchfixierung 4 versehenen Schlauchummantelung 3 nahezu entspricht, besteht die Aufgabe, das Risiko zu minimieren, dass die Schlauchfixierung 4 gegenüber der Schlauchummantelung 3 oder die Schlauchummantelung 3 gegenüber dem Innenschlauch 2 beim Aufschieben eines Schlauch-Endstückes 5 verschoben wird.

Zur Lösung dieser Aufgabe ist bei den hier dargestellten Verfahrensvarianten vorgesehen, dass die Schlauchfixierung 5 die äußere Schlauchummantelung 3 in Umfangsrichtung vollständig umschließt und darauf derart fixiert und/oder der von der Schlauchfixierung 4 umschlossene Schlauch mit Hilfe des Schneidwerkzeuges derart durchtrennt wird, dass eine Relativverschiebung der Schlauchfixierung 4 gegenüber der Schlauchummantelung 3 beziehungsweise der Schlauchummantelung 3 gegenüber dem Innenschlauch 2 verhindert ist.

In den Fig. 1 bis 4 einerseits und den Fig. 1 bis 8 andererseits sind zwei Varianten eines solchen Verfahrens veranschaulicht, bei dem die Schlauchfixierung 4 durch ein einseitig klebendes Klebeband gebildet ist. Ein als Schlauchfixierung 4 dienendes Klebeband kann praktisch an jeder Stelle eines gegebenenfalls auch langen Schlauches positioniert und aufgebracht werden. Darüber hinaus bietet ein einseitig klebendes Klebeband den Vorteil, dass das Klebeband derart fest auf den Schlauch aufgezogen werden kann, dass das als Schlauchfixierung 4 dienende Klebeband auf der Schlauchummantelung 3 und die Schlauchummantelung 3 auf dem Innenschlauch 2 fixiert und eine unbeabsichtigte Relativverschiebung dieser Bestandteile 2, 3 und 4 verhindert wird.

Bei der in Fig. 1 bis 4 gezeigten Vorgehensweise weist die als Klebeband ausgestaltete Schlauchfixierung 4 ein den Schlauch vollständig umschließendes Mittelstück 6 auf, an das sich beidseits Schlauchfixierungs-Endstücke 7, 8 anschließen. Diese Schlauchfixierungs-Endstücke 7, 8 liegen mit ihren Klebeflächen 9 aneinander an, wobei die mit ihren Klebeflächen 9 aneinander anliegenden Schlauchfixierungs-Endstücke 7, 8 derart an den Schlauch angelegt sind, dass die Klebefläche 9 eines der Schlauchfixierungs-Endstücke 7, 8 mit einem über das andere Schlauchfixierungs-Endstück 8, 7 überstehenden Teilbereich an dem Schlauch oder dem Schlauchteilstück 1 klebend gehalten ist.

Da somit sichergestellt ist, dass die Schlauchfixierungs-Endstücke 7, 8 nicht störend über den Schlauch vorstehen, lässt sich ein Schlauch-Endstück 5 leicht über das stirnseitige Ende eines Schlauches aufschieben.

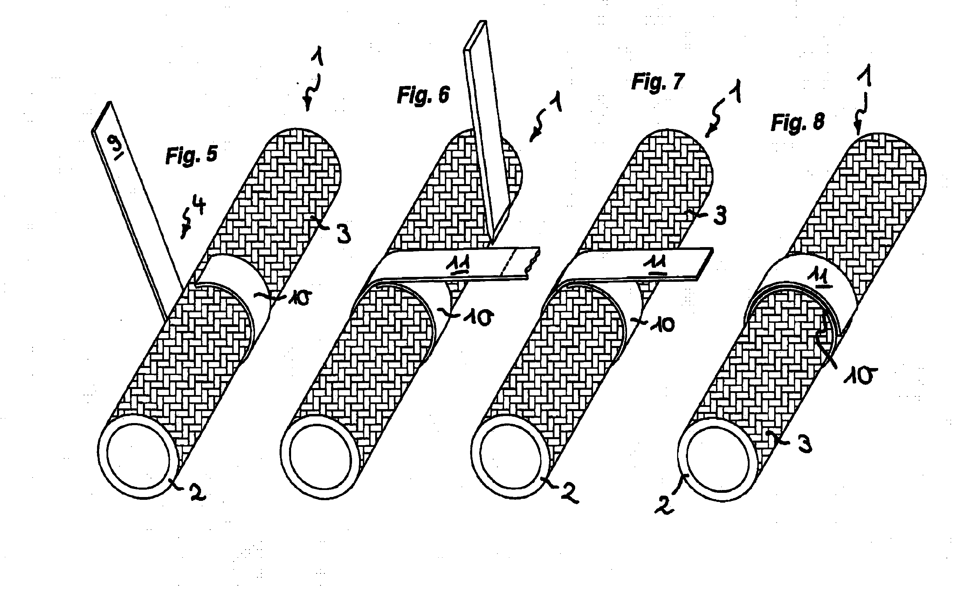

Die in Fig. 5 bis 8 gezeigte Verfahrensweise hat demgegenüber zwei miteinander verbundene Schlauchfixierungs-Teilbereiche 10, 11, von denen der eine Schlauchfixierungs-Teilbereich 10 den Schlauch vollständig umschließt und von denen der andere Schlauchfixierungs-Teilbereich 11 mit seiner Klebefläche 9 klebend an der Außenseite des den Schlauch umschließenden Schlauchfixierungs-Teilbereiches 10 gehalten ist. Bei dieser Vorgehensweise steht die Schlauchfixierung 4 praktisch nicht über den Außendurchmesser der Schlauchummantelung 3 vor, so dass sich hier leicht ein hülsenförmiges Schlauch-Endstück 5 aufschieben lässt.

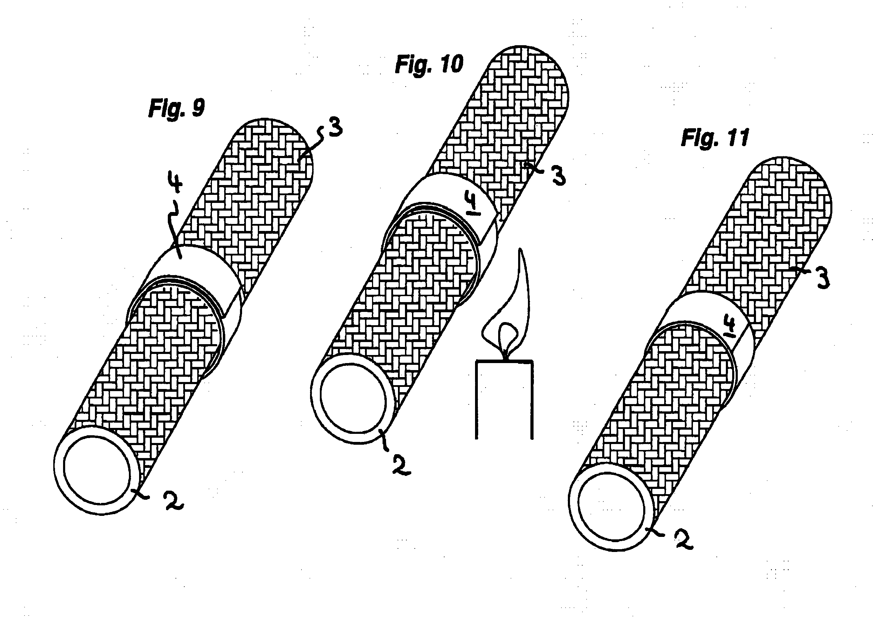

In den Fig. 9 bis 11 ist eine Verfahrensvariante veranschaulicht, bei der als Schlauchfixierung 4 ein Schrumpfschlauch dient. Zwar ist der Schrumpfschlauch in den Fig. 9 bis 11 als beidseits abgelängter Materialstreifen dargestellt, dessen Streifenenden durch Hitzeeinwirkung aneinanderkleben. Meist wird dieser Schrumpfschlauch aber ein endloses schmales Materialband sein, dessen lichter Schlauchdurchmesser durch Wärmeeinwirkung derart reduzierbar ist, dass sich der Schrumpfschlauch unverrückbar am Schlauchaußenumfang und insbesondere an der Schlauchummantelung 3 des Schlauches anlegt.

In den Fig. 12 und 13 soll verdeutlicht werden, dass die Breite der Schlauchfixierung 4 in Längsrichtung des Schlauches so bemessen sein kann, dass die über das innenliegende Ende des Schlauch-Endstückes 5 vorstehende Schlauchfixierung 4 einen Knickschutz bildet.

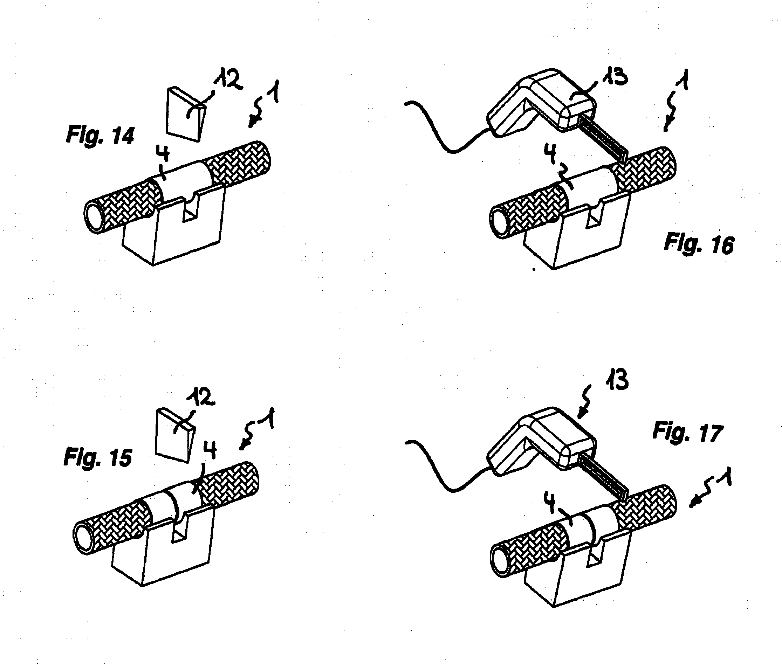

In den Fig. 14 bis 17 ist gezeigt, dass der von der Schlauchfixierung 4 vollständig umschlossene Schlauch mit Hilfe des Schneidwerkzeuges derart durchtrennt werden kann, dass eine Relativverschiebung der Schlauchfixierung 4 gegenüber der Schlauchummantelung 3 beziehungsweise der Schlauchummantelung 3 gegenüber dem Innenschlauch 2 verhindert ist. In Fig. 14 und 15 ist dazu vorgesehen, dass der Schlauch mittels eines als Schneidwerkzeug dienenden und etwa senkrecht zur Schlauch-Längsachse geführten Schneidmessers 12 abgelängt wird.

Bei dem in Fig. 16 und 17 veranschaulichten Ausführungsbeispiel wird der Schlauch mittels eines eine Schneidhitze entwickelten Schneidwerkzeuges 13 abgelängt, und zwar derart, dass das während der Schneidhitze teigig werdende Kunststoffmaterial wenigstens eines der Bestandteile: Schlauchfixierung 4, Schlauchummantelung 3 oder Innenschlauch 2 zumindest bereichsweise an wenigstens einer der benachbarten Bestandteile 2, 3, 4 verklebt oder verschmilzt. Statt des hier lötkolbenartig ausgebildeten Schneidwerkzeuges 13 kann gegebenenfalls eine Laserapparatur mit einem, ebenfalls eine Schneidhitze entwickelnden Laserstrahl verwendet werden.

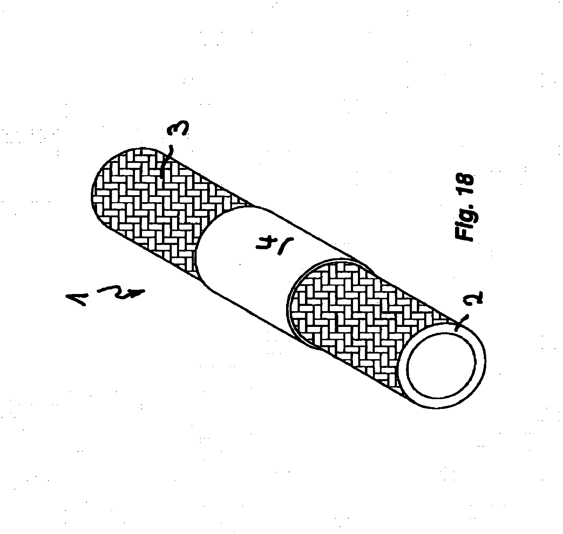

In Fig. 18 ist gezeigt, dass die Schlauchfixierung 4 auch als eine die Schlauchummantelung 3 in einem Teilabschnitt in Umfangsrichtung vollständig umschließende Schlauchümhüllung mittels Spritzgussverfahrens ausgebildet sein kann.

Unabhängig davon, ob für die Schlauchfixierung 4 ein Klebeband, ein Schrumpfschlauch oder eine mittels Spritzgussverfahrens hergestellte Schlauchumhüllung verwendet wird, ist es zweckmäßig, wenn die Schlauchfixierung eine geringfügige Dicke und vorzugsweise eine Dicke von 0,5/100stel bis 8/100stel mm aufweist.

## Patentansprüche

1. Verfahren zum Ablängen eines Schlauch-Teilstückes (1) von einem Schlauch, welcher Schlauch einen Innenschlauch (2) und eine den Innenschlauch (2) umschließende äußere Schlauchummantelung (3) aufweist, wobei das Schlauch-Teilstück (1) mit Hilfe eines Schneidwerkzeuges an einer Schnittstelle in einer quer zur Längserstreckung des Schlauches orientierten Schnittebene von diesem abgetrennt wird, wobei die Schlauchummantelung (3) des Schlauches mittels einer durchtrennbaren Schlauchfixierung (4) umhüllt wird, welche die vorgesehene Schnittstelle überdeckt, bevor das Schlauch-Teilstück (1) an der Schnittstelle vom Schlauch mit Hilfe des Schneidwerkzeuges abgetrennt wird, und wobei die Schlauchfixierung (4) die äußere Schlauchummantelung (3) in Umfangsrichtung vollständig umschließt, **dadurch gekennzeichnet, dass** die Schlauchfixierung (4) auf der Schlauchummantelung (3) derart fixiert und/oder der von der Schlauchfixierung (4) umschlossene Schlauch mit Hilfe des Schneidwerkzeuges derart durchtrennt wird, dass eine Relativverschiebung der Schlauchfixierung (4) gegenüber der Schlauchummantelung (3) beziehungsweise der Schlauchummantelung (3) gegenüber dem Innenschlauch (2) verhindert ist.

2. Verfahren nach Anspruch 1, **dadurch gekennzeichnet, dass** die Schlauchfixierung (4) ein einseitig klebendes Klebeband ist.

3. Verfahren nach Anspruch 2, **dadurch gekennzeichnet, dass** die als Klebeband ausgestaltete Schlauchfixierung (4) ein den Schlauch vollständig umschließendes Mittelstück (6) hat, an das sich beidseits Schlauchfixierungs-Endstücke (7, 8) anschließen, dass die Schlauchfixierungs-Endstücke (7, 8) mit ihren Klebeflächen (9) aneinander anliegen und dass die mit ihren Klebeflächen (9) aneinander anliegenden Schlauchfixierungs-Endstücke (7, 8) derart an den Schlauch angelegt sind, dass die Klebefläche (9) eines der Schlauchfixierungs-Endstücke (7, 8) mit einem über das andere Schlauchfixierungs-Endstück (7, 8) überstehenden Teilbereich an dem Schlauch oder an dem Schlauch-Teilstück klebend gehalten ist.

4. Verfahren nach Anspruch 2, **dadurch gekennzeichnet, dass** die als Klebeband ausgestaltete Schlauchfixierung (4) zwei miteinander verbundene Schlauchfixierungs-Teilbereiche (10, 11) hat, von denen der eine Schlauchfixierungs-Teilbereich (10) den Schlauch vollständig umschließt und von denen der andere Schlauchfixierungs-Teilbereich (11) mit seiner Klebefläche (9) klebend an der Außenseite des den Schlauch umschließenden Schlauchfixierungs-Teilbereiches (10) erhalten ist.

5. Verfahren nach Anspruch 1, **dadurch gekennzeichnet, dass** die Schlauchfixierung (4) ein Schrumpfschlauch ist, dessen lichter Schlauchdurchmesser durch Wärmeeinwirkung derart reduzierbar ist, dass sich der Schrumpfschlauch unverrückbar am Schlauchaußenumfang und insbesondere an der Schlauchummantelung (3) des Schlauches anlegt.

6. Verfahren nach Anspruch 1, **dadurch gekennzeichnet, dass** die Schlauchfixierung (4) als eine die Schlauchummantelung (3) in einem Teilabschnitt in Umfangsrichtung vollständig umschließende und im Spritzguss-Verfahren hergestellte Umhüllung ausgestaltet ist.

7. Verfahren nach einem der Ansprüche 1 bis 6, **dadurch gekennzeichnet, dass** der Schlauch mittels eines als Schneidwerkzeug dienenden und etwa senkrecht zur Schlauch-Längsrichtung geführten Schneidmesser (12) abgelängt wird.

8. Verfahren nach einem der Ansprüche 1 bis 7, **dadurch gekennzeichnet, dass** auf das mit Hilfe der Schlauchfixierung (4) gesicherte Ende des Schlauch-Teilstückes (1) eine Klemmhülse, eine Crimphülse oder dergleichen Schlauch-Endstück (5) aufgeschoben ist und dass die Schlauchfixierung (4) über das innenliegende Ende des Schlauch-Endstückes (5) vorsteht und einen Knickschutz bildet.

9. Verfahren nach einem der Ansprüche 1 bis 8, **dadurch gekennzeichnet, dass** der Schlauch mittels eines eine Schneidhitze entwickelnden Schneidwerkzeuges (13) abgelängt wird, und zwar vorzugsweise derart, dass das während der Schneidhitze teigig werdende Kunststoffmaterial wenigstens eines der Bestandteile: Schlauchfixierung (4), Schlauchummantelung (3) beziehungsweise Innenschlauch (2) zumindest bereichsweise an wenigstens einer der benachbarten Bestandteile (2, 3, 4) fixiert.
